# FASCICULE DE BREVET EUROPEEN

(11) **EP 2 266 830 B1**
(45) Date de publication et mention de la délivrance du brevet: **14.03.2012**
(21) Numéro de dépôt: 09290486.1
(22) Date de dépôt: 24.06.2009
(51) Int. Cl.: B60K 7/00

(54) **Système autonome de motorisation**
Autonome Antriebseinheit
Autonomic power unit

(43) Date de publication de la demande: 29.12.2010
(73) Titulaire: Gardes, Florian, 16340 L'Isle d'Espagnac (FR); Juan, Antoine, 16340 Champniers (FR); Penigaud, Jérôme, 33000 Bordeaux (FR)
(72) Inventeur: Gardes, Florian, 16340 L'Isle d'Espagnac (FR); Juan, Antoine, 16340 Champniers (FR); Penigaud, Jérôme, 33000 Bordeaux (FR)
(74) Mandataire: Hirsch & Associés

(56) Documents cités:
- EP-A- 0 861 648
- EP-A- 0 945 113
- EP-A- 1 350 652
- WO-A-98/19875
- US-A- 5 732 786

## Description

L'invention concerne un système autonome de motorisation électrique adapté pour être utilisé dans une roue de véhicule.

Typiquement un véhicule léger peut être équipé d'un système de motorisation électrique permettant de déplacer le véhicule sans un effort, ou avec un effort limité de la part d'un utilisateur. Des systèmes de motorisation sont connus des fabricants de chariots électriques, vélos à assistance électrique, véhicules légers électriques ou hybrides.

Un tel système comprend un ou plusieurs moteurs électriques, un contrôleur qui assure le pilotage des moteurs électriques, une batterie composée d'accumulateurs constituant une réserve d'énergie électrique, et une commande assurant l'interface avec l'utilisateur et permettant d'agir sur le moteur.

Le document WO-A-2004/050385 décrit une roue comprenant un moteur, des accumulateurs, et un contrôleur rassemblés dans un même ensemble. Cependant l'assemblage reste complexe, car les éléments sont montés sur un support interne. La roue est entraînée en rotation par un pignon entre l'arbre de sortie du moteur et la jante sur laquelle est fixée le pneu. Un tel système de transmission n'est pas sécurisé car le pignon risque de subir un serrage en cas d'un choc subi par la roue.

Le document WO-A-03/030336 décrit un système de motorisation comprenant un moteur, des accumulateurs et un contrôleur dans un seul ensemble. Les accumulateurs, et le contrôleur sont montés dans la partie interne du stator du moteur. Cependant l'assemblage du système reste complexe, car il est obtenu par l'emboîtement de plusieurs pièces entre elles et les éléments sont maintenus dans le stator à l'aide d'une structure de maintien rigide. De plus, le système de transmission n'est pas sécurisé car le rotor en rotation est susceptible de produire de la limaille qui peut provoquer des courts-circuits.

Le document WO-A-03/097437 décrit un système de motorisation comprenant un moteur, des accumulateurs, et un contrôleur montés dans un seul ensemble. Les accumulateurs et le contrôleur sont montés dans la partie interne du stator du moteur. Cependant le système reste complexe, car il est obtenu par l'emboîtement de plusieurs pièces entre elles. De plus, le système de transmission n'est pas sécurisé car le rotor en rotation est susceptible de produire de la limaille qui peut provoquer des courts-circuits.

Le document US-A-5 732 786 décrit une roue selon le préambule de la revendication 1. Le document EP-A-1 350 652 décrit un système de motorisation comprenant un moteur, des accumulateurs et un contrôleur dans un seul ensemble. Les accumulateurs et le contrôleur sont montés dans la partie interne du stator du moteur. Le document WO 98/19875 décrit un système de motorisation comprenant un moteur, des accumulateurs et un contrôleur dans un seul ensemble. Dans chacun de ces documents les différents éléments sont montés sur un support interne.

Il existe donc un besoin pour un système de motorisation électrique qui soit simple à fabriquer, et qui présente des caractéristiques de sécurité améliorée.

A cet effet l'invention propose un système autonome de motorisation électrique dans lequel les éléments nécessaires au fonctionnement et au pilotage d'une machine tournante électrique sont maintenus directement par un carter, et qui comprend un système de transmission ne présentant aucune pièce d'usure métallique.

Plus particulièrement, l'invention propose un système autonome de motorisation pour roue de véhicule selon la revendication 1.

Selon un mode de réalisation, le carter est en matériau isolant électrique.

Selon un mode de réalisation, le carter est en plastique chargé ou renforcé.

Selon un mode de réalisation, le carter est en un matériau comprenant l'ABS- PC (Acrylonitrile Butadiène Styrène / Polycarbonate).

Selon un mode de réalisation, le carter comprend une valve d'expulsion des gaz.

Selon un mode de réalisation, au moins un des accumulateurs est de type Ni-MH ou Li-ion.

Selon un mode de réalisation, les accumulateurs sont de type cylindrique étanches et de format C, D ou dérivé.

Selon un mode de réalisation, le centre de gravité du système est situé au centre du carter.

Selon un mode de réalisation, la liaison entre l'axe et le carter est assurée par deux roulements à billes.

Selon un mode de réalisation, le moteur électrique est de type courant continu sans balais à aimants permanents.

Selon un mode de réalisation, l'axe peut-être solidaire à un châssis de véhicule et le carter peut être solidaire à une roue de véhicule.

Selon un mode de réalisation, le système autonome de motorisation selon l'invention comprend en outre un outil de gestion électronique à distance non filaire.

Selon un mode de réalisation, le carter peut être solidaire à un châssis de véhicule, et l'axe peut être solidaire à une roue de véhicule.

Selon un mode de réalisation, le système autonome de motorisation comprend un moteur électrique situé au centre du carter, tel que l'axe du moteur électrique est l'axe du système autonome de motorisation.

Selon un mode de réalisation, le système autonome de motorisation comprend un moteur électrique situé à une distance radiale de l'axe du système autonome de motorisation.

Selon un mode de réalisation, la transmission mécanique du mouvement de rotation est assurée par au moins un pignon plastique, et/ou au moins une courroie non renforcée par des matières métalliques.

L'invention concerne également un véhicule comprenant un ou plusieurs systèmes autonomes de motorisation.

D'autres caractéristiques et avantages de l'invention apparaîtront à la lecture de la description détaillée qui suit. Cette description est donnée à titre d'exemple uniquement, et en référence aux figures annexées qui montrent :
- figure 1, un système autonome de motorisation selon un premier mode de réalisation ;
- figure 2, un système autonome de motorisation selon un deuxième mode de réalisation ;
- figure 3, un système autonome de motorisation présentant un exemple de transmission mécanique dans un des modes de réalisation des figures 1 et 2, dans lequel l'arbre de sortie du moteur est l'axe de rotation du système autonome de motorisation ;
- figure 4, un système autonome de motorisation présentant un exemple de transmission mécanique dans un des modes de réalisation des figures 1 et 2, dans lequel l'arbre de sortie du moteur est à une distance radiale de l'axe de rotation du système autonome de motorisation.

Le système autonome de motorisation selon l'invention est adapté à être intégré dans une roue de véhicule. Le principal avantage du système de motorisation selon l'invention consiste en sa simplicité de mise en oeuvre. En effet, il comprend un carter qui supporte directement et solidarise :
- un ou plusieurs moteurs électriques qui peuvent générer un mouvement de rotation,
- des accumulateurs rechargeables qui stockent et restituent l'énergie nécessaire au fonctionnement autonome du système,
- et un contrôleur qui gère le pilotage du moteur électrique, et la gestion des accumulateurs.

Le système présente également des avantages de sécurité. En effet le système ne comprend aucune pièce d'usure métallique dans une ou des transmissions mécaniques du mouvement de rotation. Ainsi, lors de son fonctionnement le système ne produit pas de limailles qui sont susceptibles de provoquer des courts-circuits lorsqu'elles sont mises en contact avec les parties électriques.

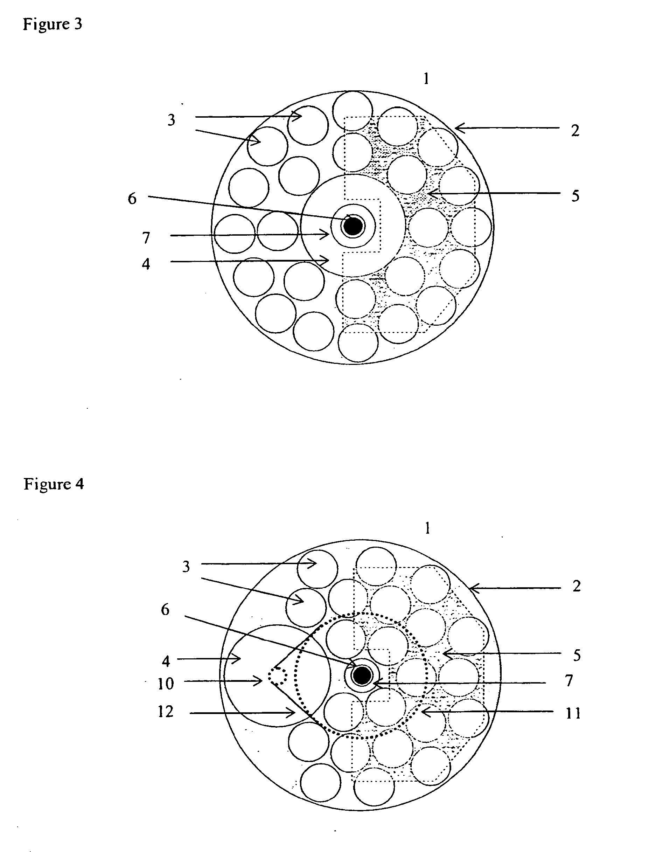

Le système autonome de motorisation sera mieux compris en faisant référence aux figures 3 et 4 qui présentent chacune un système autonome de motorisation selon l'invention.

Le carter 2 supporte directement et solidarise les accumulateurs 3, le moteur électrique 4, et le contrôleur 5. Le carter 2 comprend deux demi coques profilées pour recevoir le moteur électrique 4, les accumulateurs 3, et le contrôleur 5. Une première demi coque peut être fixée à la jante de la roue, et une seconde demi coque vient s'emboîter sur la première demi coque. A l'aide d'un réglage de vis traversantes, la pression exercée par les demi coques augmente, permettant au carter 2 de supporter directement et de maintenir les éléments. Ainsi, le système ne comprend aucun élément de maintien interne, et la structure du système autonome de motorisation est simplifiée.

De préférence, les éléments sont répartis de manière à éviter un effet de ballant lors de la mise en rotation. Par exemple, les éléments peuvent être disposés autour de l'axe 6, de sorte que le centre de gravité du système se trouve au centre du carter 2.

De préférence, le carter 2 est en matériau isolant électrique, et possède également des propriétés mécaniques qui permettent de garantir le maintien des éléments et la résistance aux contraintes mécaniques subies par le système, telles que des vibrations ou des chocs. Par exemple, le matériau du carter 2 peut être en ABS-PC (Acrylonitrile Butadiène Styrène / Polycarbonate) ou en un matériau composite. Le matériau du carter 2 peut également être en plastique contenant des charges (particules minérales par exemple) ou renforcé (par des fibres de verre par exemple).

De préférence, le carter 2 présente des caractéristiques de protection des éléments du système, et de sécurité pour un utilisateur. Par exemple, le carter 2 peut comprendre une valve d'expulsion des gaz afin d'évacuer des gaz potentiellement inflammables qui peuvent être produits par un accumulateur en dysfonctionnement. Typiquement, la valve d'expulsion des gaz peut-être une membrane de type Goretex.

De préférence, le carter 2 est étanche. Par exemple, si le carter 2 comprend deux demi coques, celles-ci peuvent s'emboîter de façon hermétique. Pour améliorer l'étanchéité de la partie intérieure du carter 2, la liaison entre l'axe 6 et le carter 2 peut-être assurée par deux roulements à billes 7. Des joints en plastique peuvent également être positionnés entre les pièces composant le carter 2.

Les accumulateurs 3 rechargeables stockent et restituent l'énergie nécessaire au fonctionnement autonome de l'invention. Afin d'assurer une autonomie suffisante du système pour l'alimentation du moteur électrique 4, les accumulateurs 3 utilisés peuvent être de type Ni-MH ou Li-ion. En effet, ces accumulateurs 3 présentent les meilleures performances en énergie volumique. De préférence, les accumulateurs 3 sont étanches afin de supporter un mouvement de rotation et des vibrations du système. Typiquement, les accumulateurs 3 peuvent être cylindriques et ne sont pas limité quant à leurs formats. Il est possible d'utiliser des formats standard industriels, par exemple les formats de type C, D, ou dérivé selon le standard ANSI (American National Standards Institute). Ces formats peuvent s'appliquer aux accumulateurs de type Li-Ion, et Ni-MH.. De préférence, les accumulateurs peuvent être rechargés sans être sortis du système de motorisation. A cet effet, des terminaux de raccordement électrique peuvent permettre la recharge des accumulateurs 3 par un chargeur extérieur.

Le contrôleur 5 gère le pilotage du moteur électrique 4 à partir de l'énergie fournie par les accumulateurs 3. Le contrôleur 5 peut comprendre par exemple des fonctions de pilotage avec un asservissement à la vitesse, ou au couple, de sécurités sur-courant et sur-température. Le contrôleur 5 peut comprendre également un transmetteur qui permet de recevoir les consignes de pilotage du moteur électrique 4, et d'émettre des informations relatives au fonctionnement du moteur électrique 4 à un dispositif à distance. Les informations relatives au moteur électrique 4 peuvent être sa vitesse, ou d'autres informations permettant le diagnostic du moteur électrique 4. Le contrôleur 5 comprend également des fonctions de gestion des accumulateurs 3. Le contrôleur 5 peut par exemple comprendre des fonctions de gestion de l'état de charge, de la tension, de la température, du courant de la batterie. Le contrôleur 5 peut également comprendre des fonctions adaptées à chaque type d'accumulateur 3. Par exemple, si un accumulateur 3 est de type Li-ion, le contrôleur 5 peut comprendre des fonctions de sécurité liées à l'utilisation du lithium, telles qu'une déconnexion dans les cas de surcharge, de sur-décharge, de sur-courant, ou de court-circuit dans l'accumulateur.

Le système peut comprendre également un outil de gestion électronique à distance adapté pour communiquer avec le transmetteur du contrôleur. L'outil de gestion électronique peut par exemple être disposé sur un organe de guidage de l'objet sur lequel est monté le système.

Le système de motorisation selon l'invention peut être intégré à une roue 8 d'un véhicule.

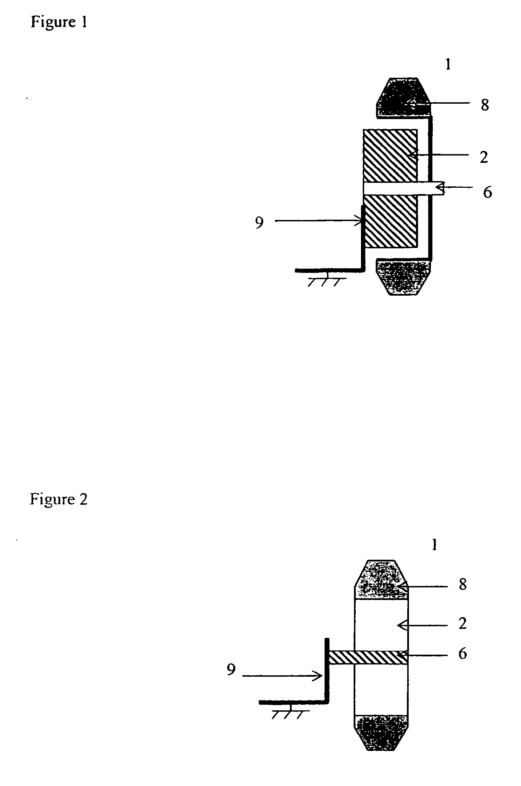

Dans un premier mode de réalisation présenté en figure 1, le carter 2 est solidaire à un châssis 9 du véhicule et l'axe 6 est solidaire à la roue 8. La roue 8 peut être entraînée en rotation par l'intermédiaire de l'axe 6 mis en rotation par le moteur électrique 4, le carter 2 restant fixe. Dans ce mode de réalisation, une liaison filaire peut être établie avec des composants à distance. Par exemple, un outil de gestion électronique à distance peut être raccordé au carter 2 par un moyen de communication filaire. Une liaison électrique peut également permettre d'alimenter le système par une source auxiliaire en cours de fonctionnement, ou permettre de connecter plusieurs moteurs autonomes.

Dans un second mode de réalisation présenté en figure 2, l'axe 6 est solidaire à un châssis 9 du véhicule et le carter 2 est solidaire à la roue 8. La roue 8 peut être entraînée en rotation par l'intermédiaire du carter 2 mis en rotation par le moteur électrique 4. Les accumulateurs 3 et le contrôleur 5 sont entraînés en rotation avec le carter 2, l'axe restant fixe.

Le système autonome de motorisation électrique 1 ne comprend aucune pièce d'usure métallique dans la transmission mécanique du mouvement de rotation. Ainsi, lors de son fonctionnement le système ne produit pas de limailles qui sont susceptibles de provoquer des courts-circuits lorsqu'elles sont mises en contact avec les parties électriques. Le système autonome électrique selon l'invention présente ainsi une sécurité améliorée.

De préférence, le moteur électrique 4 est de type courant continu sans balais (BLDC pour brushless DC motor en anglais) à aimants permanents. Ce moteur a l'avantage supplémentaire d'être silencieux en fonctionnement et de présenter une durée de vie améliorée.

Dans un mode de réalisation présenté en figure 3, le moteur électrique 4 est situé au centre du carter 2, et l'axe du moteur électrique 4 est l'axe 6 du système de motorisation 1. Le moteur électrique 4 peut alors entraîner directement le mouvement de rotation d'une roue 8 de véhicule auquel le système autonome de motorisation 1 est fixé.

Dans un autre mode de réalisation présenté en figure 4, un effet de démultiplication entre le moteur électrique 4 et le mouvement de rotation transmis est recherché. Le moteur électrique 4 est situé à une distance radiale de l'axe 6 du système de motorisation 1, et met en rotation une poulie 10 de moteur électrique 4. Le système présente une poulie 11 de l'axe 6 située au centre du carter 2. La poulie 10 de moteur électrique 4 entraîne en rotation la poulie 11 de l'axe 6 par l'intermédiaire d'une ou plusieurs transmissions mécaniques. Lesdites transmissions mécaniques peuvent comprendre une courroie synchrone 12 non renforcée par des matières métalliques, et/ou des pignons en plastique. La courroie synchrone 12 peut par exemple être renforcée par des fibres de verre. Dans un mode de réalisation, on utilise une courroie 12 dont la surface présente des créneaux qui s'imbriquent dans les dents de la poulie dentée 11. Cela permet de transmettre la puissance du moteur électrique 4 à une roue 8, sans risque de glissement de la courroie 12 par rapport à la surface de la poulie, et permet une bonne transmission du couple du moteur électrique 4.

Dans un mode de réalisation particulier, l'axe 6 est solidaire au châssis 9 du véhicule et le carter 2 est solidaire à la roue 8. Le moteur électrique 4 est situé à une distance radiale de l'axe 6 du système de motorisation 1. Le moteur électrique 4 génère un mouvement de rotation de la poulie 11 de l'axe 6 par l'intermédiaire d'une ou plusieurs transmissions mécaniques comme il est décrit dans le paragraphe précédent. Le carter entre en rotation entraînant en rotation la roue 8, les accumulateurs 3, le contrôleur 5, et le moteur électrique 4, l'axe 6 restant fixe. Ce mode de réalisation particulier correspond à la combinaison des modes de réalisation présentés en figures 2 et 4.

Cependant les deux modes de réalisation de la fixation du système autonome peuvent se combiner avec l'un quelconque des deux modes de transmission du mouvement de rotation présentés ci-dessus.

Le système autonome de motorisation peut-être installé dans de nombreux objets, par exemple un véhicule. En particulier, le système autonome de motorisation selon l'invention peut être utilisé pour motoriser des roues de véhicule léger. Le moteur peut alors présenter une puissance maximale de l'ordre du kilowatt.

Bien entendu, la présente invention n'est pas limitée aux modes de réalisation décrits à titre d'exemple.

## Revendications

1. Système autonome de motorisation (1) pour roue de véhicule comprenant :
- un carter (2);
- des accumulateurs (3), qui stockent et restituent l'énergie nécessaire au fonctionnement autonome du système ;
- au moins un moteur électrique (4) générant un mouvement de rotation ;
- un contrôleur (5) qui gère le pilotage du moteur électrique (4), et la gestion des accumulateurs (3);
- un axe (6) de rotation du système autonome de motorisation (1);
**caractérisé en ce que** :
- le carter (2) comprend deux demi coques profilées pour recevoir les accumulateurs (3), le ou les moteurs électriques (4), et le contrôleur (5), le carter (2) supportant directement et solidarisant les accumulateurs (3), le ou les moteurs électriques (4), et le contrôleur (5) du fait de la pression exercée par les demi coques emboîtées ;
- le système ne comprend aucune pièce d'usure métallique dans une ou des transmissions mécaniques du mouvement de rotation.

2. Système autonome de motorisation (1) selon la revendication 1 dans lequel le carter (2) est en matériau isolant électrique.

3. Système autonome de motorisation (1) selon la revendication 1 ou 2 dans lequel le carter (2) est en plastique chargé ou renforcé.

4. Système autonome de motorisation (1) selon l'une quelconque des revendications précédentes dans lequel le carter (2) est en un matériau comprenant l'ABS-PC (Acrylonitrile Butadiène Styrène / Polycarbonate).

5. Système autonome de motorisation (1) selon l'une quelconque des revendications précédentes dans lequel le carter (2) comprend une valve d'expulsion des gaz.

6. Système autonome de motorisation (1) selon l'une quelconque des revendications précédentes dans lequel au moins un des accumulateurs (3) est de type Ni-MH ou Li-ion.

7. Système autonome de motorisation (1) selon l'une quelconque des revendications précédentes dans lequel les accumulateurs (3) sont de type cylindrique étanche et de format C, D ou dérivé.

8. Système autonome de motorisation (1) selon l'une quelconque des revendications précédentes dans lequel le centre de gravité du système est situé au centre du carter (2).

9. Système autonome de motorisation (1) selon l'une quelconque des revendications précédentes dans lequel la liaison entre l'axe (6) et le carter (2) est assurée par deux roulements à billes (7).

10. Système autonome de motorisation (1) selon l'une quelconque des revendications précédentes dans lequel le moteur électrique (4) est de type courant continu sans balais à aimants permanents.

11. Système autonome de motorisation (1) selon l'une des revendications précédentes comprenant en outre un outil de gestion électronique à distance non filaire.

12. Système autonome de motorisation (1) selon l'une quelconque des revendications précédentes dans lequel l'axe (6) est solidaire à un châssis (9) de véhicule et le carter (2) peut être solidaire à une roue (8) de véhicule.

13. Système autonome de motorisation (1) selon l'une quelconque des revendications 1 à 9 dans lequel le carter (2) est solidaire à un châssis (9) de véhicule, et l'axe (6) peut être solidaire à une roue (8) de véhicule.

14. Système autonome de motorisation (1) selon l'une quelconque des revendications précédentes comprenant un moteur électrique (4) situé au centre du carter (2), tel que l'axe du moteur électrique (4) est l'axe (6) du système autonome de motorisation (1).

15. Système autonome de motorisation (1) selon l'une quelconque des revendications 1 à 13 comprenant un moteur électrique (4) situé à une distance radiale de l'axe (6) du système autonome de motorisation (1).

16. Système autonome de motorisation (1) selon la revendication 15 dans lequel la transmission mécanique du mouvement de rotation est assurée par au moins un pignon plastique, et/ou au moins une courroie non renforcée par des matières métalliques.

17. Véhicule comprenant un ou plusieurs systèmes autonomes de motorisation (1) selon l'une des revendications précédentes.

## Claims

1. A self-contained drive system (1) for a vehicle wheel, including:
- a casing (2);
- accumulators (3), which store and release the energy for the self-contained operation of the system;
- at least one electric motor (4) capable of generating a rotational movement;
- a controller (5) which manages the control of the electric motor (4) and of the accumulators (3);
- a rotational shaft (6) for the self-contained drive system (1);
**characterized in that**
- the casing (2) comprises two profiled half-shells for receiving the accumulators (3), the electric motor(s) (4), and the controller (5), the casing (2) directly supporting and standing together the accumulators (3), the electric motor(s) (4), and the controller (5) due to the pressure exerted by the nested half-shells;
- the system does not comprise any metal wear parts in (the) mechanical transmission(s) responsible for transmission of the rotational movement.

2. The self-contained drive system (1) according to claim 1, wherein the casing (2) is made from an electrically insulating material.

3. The self-contained drive system (1) according to claim 1 or 2, wherein the casing (2) is made from filled or reinforced plastic.

4. The self-contained drive system (1) according to any one of the preceding claims, wherein the casing (2) is made from a material comprising ABS-PC (Acrylonitrile Butadiene Styrene / Polycarbonate).

5. The self-contained drive system (1) according to any one of the preceding claims, wherein the casing (2) comprises a gas expulsion valve.

6. The self-contained drive system (1) according to any one of the preceding claims, wherein at least one of the accumulators (3) is of the Ni-MH or Li-ion type.

7. The self-contained drive system (1) according to any one of the preceding claims, wherein the accumulators (3) are of the sealed cylindrical type and of format C, D or a derivative.

8. The self-contained drive system (1) according to any one of the preceding claims, wherein the center of gravity of the system is situated at the center of the casing (2).

9. The self-contained drive system (1) according to any one of the preceding claims, wherein the connection between the shaft (6) and the casing (2) is ensured by two ball bearings (7).

10. The self-contained drive system (1) according to any one of the preceding claims, wherein the electric motor (4) is of the permanent magnet brushless direct current type.

11. The self-contained drive system (1) according to any one of the preceding claims, also comprising a wireless remote electronic management tool.

12. The self-contained drive system (1) according to any one of the preceding claims, wherein the shaft (6) stands together with a vehicle chassis (9) and the casing (2) can be stand together with a vehicle wheel (8).

13. The self-contained drive system (1) according to any one of claims 1 to 9, wherein the casing (2) stands together with a vehicle chassis (9), and the shaft (6) can be stand together with a vehicle wheel (8).

14. The self-contained drive system (1) according to any one of the preceding claims, comprising an electric motor (4) situated at the center of the casing (2), such that the shaft of the electric motor (4) is the shaft (6) of the self-contained drive system (1).

15. The self-contained drive system (1) according to any one of claims 1 to 13, comprising an electric motor (4) situated at a radial distance from the shaft (6) of the self-contained drive system (1).

16. The self-contained drive system (1) according to claim 15, wherein the mechanical transmission of the rotational movement is done by at least one plastic pinion and/or at least one belt not reinforced by metals.

17. A vehicle comprising one or more self-contained drive systems (1) according to one of the preceding claims.

## Patentansprüche

1. Autonomes Antriebssystem (1) für ein Fahrzeugrad, welches umfasst:
- ein Gehäuse (2);
- Akkumulatoren (3), welche die für den autonomen Betrieb des Systems notwendige Energie speichern und wieder abgeben;
- mindestens einen Elektromotor (4), der eine Drehbewegung erzeugt;
- eine Steuereinheit (5), welche die Leitung des Elektromotors (4) und die Führung der Akkumulatoren (3) durchführt;
- eine Drehachse (6) des autonomen Antriebssystems (1) ;
**dadurch gekennzeichnet, dass**:
- das Gehäuse (2) zwei Profilhalbschalen zur Aufnahme der Akkumulatoren (3), des oder der Elektromotoren (4) und der Steuereinheit (5) umfasst, wobei das Gehäuse die Akkumulatoren (3), den oder die Elektromotoren (4) und die Steuereinheit (5) aufgrund des Druckes, der durch die beiden zusammengefügten Halbschalen ausgeübt wird, unmittelbar trägt und miteinander fest verbindet;
- das System kein mechanisches Verschleißteil in einem oder den Mitteln zur mechanischen Übertragung der Drehbewegung umfasst.

2. Autonomes Antriebssystem (1) nach Anspruch 1, wobei das Gehäuse (2) aus einem elektrisch isolierenden Material besteht.

3. Autonomes Antriebssystem (1) nach Anspruch 1 oder 2, wobei das Gehäuse (2) aus gefülltem oder verstärktem Kunststoff besteht.

4. Autonomes Antriebssystem (1) nach einem der vorhergehenden Ansprüche, wobei das Gehäuse (2) aus einem Material besteht, welches ABS-PC (Acrylnitril-Butadien-Styrol/Polycarbonat) umfasst.

5. Autonomes Antriebssystem (1) nach einem der vorhergehenden Ansprüche, wobei das Gehäuse (2) ein Gasausstoßventil umfasst.

6. Autonomes Antriebssystem (1) nach einem der vorhergehenden Ansprüche, wobei mindestens einer der Akkumulatoren (3) vom Typ eine Ni-MH- oder Li-Ionen-Akkumulators ist.

7. Autonomes Antriebssystem (1) nach einem der vorhergehenden Ansprüche, wobei die Akkumulatoren (3) vom dichten zylindrischen Typ und vom Format C, D oder einem davon abgeleiteten Format sind.

8. Autonomes Antriebssystem (1) nach einem der vorhergehenden Ansprüche, wobei sich der Schwerpunkt des Systems im Mittelpunkt des Gehäuses (2) befindet.

9. Autonomes Antriebssystem (1) nach einem der vorhergehenden Ansprüche, wobei die Verbindung zwischen der Achse (6) und dem Gehäuse (2) durch zwei Kugellager (7) erstellt wird.

10. Autonomes Antriebssystem (1) nach einem der vorhergehenden Ansprüche, wobei der Elektromotor (4) vom Typ eines bürstenlosen Gleichstrommotors mit Dauermagneten ist.

11. Autonomes Antriebssystem (1) nach einem der vorhergehenden Ansprüche, welcher außerdem ein Werkzeug zur drahtlosen elektronischen Fernsteuerung umfasst.

12. Autonomes Antriebssystem (1) nach einem der vorhergehenden Ansprüche, wobei die Achse (6) mit einem Fahrzeugrahmen (9) fest verbunden ist und das Gehäuse (2) mit einem Fahrzeugrad (8) fest verbunden sein kann.

13. Autonomes Antriebssystem (1) nach einem der Ansprüche 1 bis 9, wobei das Gehäuse (2) mit einem Fahrzeugrahmen (9) fest verbunden ist und die Achse (6) mit einem Fahrzeugrad (8) fest verbunden sein kann.

14. Autonomes Antriebssystem (1) nach einem der vorhergehenden Ansprüche, welches einen Elektromotor (4) umfasst, der in der Mitte des Gehäuses (2) angeordnet ist, derart, dass die Achse des Elektromotors (4) die Achse (6) des autonomen Antriebssystems (1) ist.

15. Autonomes Antriebssystem (1) nach einem der Ansprüche 1 bis 13, welches einen Elektromotor (4) umfasst, der in einem radialen Abstand von der Achse (6) des autonomen Antriebssystems (1) angeordnet ist.

16. Autonomes Antriebssystem (1) nach Anspruch 15, wobei die mechanische Übertragung des Drehmoments durch ein Kunststoffritzel und/oder mindestens einen Tragriemen, das nicht durch metallische Stoffe verstärkt ist, erstellt wird.

17. Fahrzeug, welches ein oder mehrere autonome Antriebssysteme (1) nach einem der vorhergehenden Ansprüche umfasst.
